(19) **Europäisches Patentamt / European Patent Office / Office européen des brevets**

(11) **EP 4 564 578 A1**

(12) **EUROPEAN PATENT APPLICATION**
published in accordance with Art. 153(4) EPC

(43) Date of publication:
04.06.2025 Bulletin 2025/23

(21) Application number: 23905318.4

(22) Date of filing: 04.09.2023

(51) International Patent Classification (IPC):
H01M 50/463 (2021.01)     H01M 50/489 (2021.01)
H01M 50/491 (2021.01)

(52) Cooperative Patent Classification (CPC):
H01M 50/463; H01M 50/489; H01M 50/491;
Y02E 60/10

(86) International application number:
PCT/CN2023/116819

(87) International publication number:
WO 2024/131140 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.12.2022 CN 202211658946

(71) Applicant: Contemporary Amperex Technology
(Hong Kong) Limited
Central, Hong Kong (CN)

(72) Inventors:
• XU, Xiaofu
  Ningde, Fujian 352100 (CN)
• YE, Yonghuang
  Ningde, Fujian 352100 (CN)
• JIN, Haizu
  Ningde, Fujian 352100 (CN)

(74) Representative: Ran, Handong
Maucher Jenkins
Seventh Floor Offices
Artillery House
11-19 Artillery Row
London SW1P 1RT (GB)

(54) **SEPARATOR, BATTERY AND ELECTRICAL DEVICE**

(57) A separator, a battery and an electrical device. In the thickness direction of the separator, the separator has a positive electrode end and a negative electrode end, the positive electrode end being provided with a plurality of first holes, the negative electrode end being provided with a plurality of second holes, and the diameters of the first holes being greater than those of the second holes.

FIG. 1

## Description

### TECHNICAL FIELD

This application relates to the field of secondary batteries, and specifically, to a separator, a battery, and an electric device.

### BACKGROUND

Secondary batteries have been widely used in various consumer electronic products and electric vehicles due to their prominent advantages such as light weight, no pollution, and no memory effect. However, after multiple cycles, the negative electrode plate undergoes volume swelling, which can easily cause battery capacity loss and safety issues.

### SUMMARY

In view of the technical problems described in the background, this application provides a separator, aiming to solve the battery capacity loss and safety issues caused by volume swelling of the negative electrode plate during battery cycling.

To achieve the above objectives, a first aspect of an embodiment of this application provides a separator, where in a thickness direction of the separator, the separator has a positive electrode end and a negative electrode end, the positive electrode end is provided with a plurality of first openings, the negative electrode end is provided with a plurality of second openings, and an aperture of the first opening is larger than an aperture of the second opening.

Therefore, use of the separator of this application can solve the battery capacity loss and safety issues caused by volume swelling of the negative electrode plate during the metal battery cycling process.

In some embodiments of this application, the aperture of the first opening is 20 nm-1000 $\mu$m, preferably 50 nm-500 $\mu$m.

In some embodiments of this application, the aperture of the second opening is 20 nm-500 $\mu$m, preferably 50 nm-100 $\mu$m. Thus, the electrolyte retention effect of the negative electrode end of the separator can be improved while increasing its density, thereby solving the battery capacity loss and safety issues caused by volume swelling of the negative electrode plate during the metal battery cycling process.

In some embodiments of this application, along a direction from the negative electrode end to the positive electrode end, the apertures of the openings in the separator increase sequentially. Thus, the concentration gradient of metal ion diffusion during the battery charging process can be adjusted, so that metal ions are evenly deposited on the surface of the negative electrode plate, reducing the production of metal dendrites as well as the volume swelling of the negative electrode plate.

In some embodiments of this application, a capillary structure is provided in the separator along a height direction of the separator, and one end of the capillary structure is flush with a lowermost end of the separator. Thus, when the negative electrode plate undergoes volume swelling and squeezes the separator, the siphoning effect of the capillary can be utilized to siphon the electrolyte from the bottom of the cell into the separator, promptly replenishing the insufficient electrolyte in the height direction of the separator.

In some embodiments of this application, a length $H_1$ of the capillary structure is $\geq 70\% H_2$, where $H_2$ is a height of the separator. Thus, the insufficient electrolyte in the height direction of the separator can be promptly replenished.

In some embodiments of this application, a compression modulus of the separator is 5%-95%. Thus, the battery bulge caused by the volume swelling of the negative electrode plate can be reduced, improving the safety performance of the battery.

In some embodiments of this application, the separator is a sponge-based film. This can improve the electrolyte retention effect, reducing battery capacity loss.

In some embodiments of this application, the separator includes a sponge-based film and a coating, the coating is formed on at least one side of the sponge-based film, and the capillary structure is provided in the sponge-based film. This can improve the electrolyte retention effect and strength of the separator, solving the battery capacity loss and safety issues caused by the volume swelling of the negative electrode plate during the metal battery cycling process.

In some embodiments of this application, the sponge-based film includes at least one of glass fiber, nanofiber, polyethylene, polypropylene, and non-woven fabric. This can improve the electrolyte retention effect, reducing battery capacity loss.

In some embodiments of this application, the coating is formed on one side of the sponge-based film, the second openings are provided on the coating, and the first openings are provided on an end of the sponge-based film far away from the coating. This can improve the electrolyte retention effect and strength of the separator, solving the battery capacity loss and safety issues caused by the volume swelling of the negative electrode plate during the metal battery cycling process.

In some embodiments of this application, the coating is formed on both sides of the sponge-based film, the second openings are provided on the coating at the negative electrode end, and the first openings are provided on the coating at the positive electrode end. This can improve the electrolyte retention effect and strength of the separator, solving the battery capacity loss and safety issues caused by the volume swelling of the negative electrode plate during the metal battery cycling process.

In some embodiments of this application, the separator includes a first separator, a middle separator, and a second separator stacked along a thickness direction of the separator, the first openings are provided on the first separator, and the second openings are provided on the second separator.

In some embodiments of this application, an aperture of the middle separator is larger than an aperture of the first opening or an aperture of the second opening; and/or a porosity of the middle separator is larger than a porosity of the first separator or a porosity of the second separator. This can improve the electrolyte retention effect of the separator, reducing battery capacity loss.

In some embodiments of this application, the first separator, the middle separator, and the second separator satisfy at least one of the following conditions:

the porosity of the first separator is 30%-70%;
the aperture of the middle separator is 30 nm-1 $\mu$m;
the porosity of the middle separator is 40%-90%; and
the porosity of the second separator is 30%-70%.

This can improve the electrolyte retention effect of the separator, reducing battery capacity loss.

A second aspect of an embodiment of this application provides a battery. The battery includes a positive electrode plate, a negative electrode plate, and a separator, where the separator is provided between the positive electrode plate and the negative electrode plate, the separator includes the separator according to the first aspect of this application, a positive electrode end of the separator is provided close to the positive electrode plate, and a negative electrode end of the separator is provided close to the negative electrode plate.

Thus, during the charge and discharge cycles, the battery has the advantages of small capacity loss and high safety.

In some embodiments of this application, the battery is an alkali metal battery, and the alkali metal battery satisfies the following relationship: $h_2*n_2*k = Es*n_1*z*(C_1*m_1/C_2/\rho)$, where Es is an empirical parameter with a value range of 5%-100%; $C_1$ is a total gram capacity of a single positive electrode plate, in mA·h/g; $m_1$ is a unit weight of the positive electrode active material layer of a single positive electrode plate, in g/cm$^2$; $n_1$ is the number of layers of positive electrode plates in a single cell; z is the number of coated surfaces of a single positive electrode plate; $C_2$ is a theoretical gram capacity corresponding to alkali metal of the alkali metal battery, in mA-h/g; $\rho$ is a theoretical density of the alkali metal, in g/cm$^3$; $h_2$ is a thickness of a single separator, in cm; $n_2$ is the number of layers of separators in a single cell; and k is a compression percentage of a single separator. Thus, the battery has a small volume change during the charge and discharge cycle.

A third aspect of this application provides an electric device including the battery according to the third aspect, where the battery is configured to supply electric energy.

Additional aspects and advantages of this application will be given in part in the following description, part of which will become apparent from the following description or be learned from the practice of this application.

## BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:

FIG. 1 is a schematic structural diagram of a separator according to an embodiment of this application;
FIG. 2 is a schematic structural diagram of a separator according to another embodiment of this application;
FIG. 3 is a schematic structural diagram of a separator according to still another embodiment of this application;
FIG. 4 is a schematic structural diagram of a separator according to still another embodiment of this application;
FIG. 5 is a schematic structural diagram of a separator according to still another embodiment of this application;
FIG. 6 is a schematic structural diagram of a separator according to still another embodiment of this application;
FIG. 7 is a schematic structural diagram of a battery according to an embodiment of this application;
FIG. 8 is a schematic structural diagram of a battery module according to an embodiment of this application;
FIG. 9 is a schematic structural diagram of a battery pack according to an embodiment of this application;

FIG. 10 is an exploded view of FIG. 9; and
FIG. 11 is a schematic diagram of an embodiment of an electric apparatus using a battery as a power source.

Description of reference signs:

1000: separator; 11: positive electrode end; 110: first opening; 12: negative electrode end; 120: second opening; 13: capillary structure; 14: sponge-based film; 15: coating; 100: first separator; 200: middle separator; 300: second separator;
1. secondary battery; 2. battery module; 3. battery pack; 4. upper box body; and 5. lower box body.

## DESCRIPTION OF EMBODIMENTS

The following describes the embodiments of the technical solutions of this application in detail. The following embodiments are merely intended for a clearer description of the technical solutions of this application and therefore are merely used as examples but do not constitute any limitation on the protection scope of this application.

Reference to "embodiment" in the specification means that specific features, structures, or characteristics described with reference to the embodiment may be included in at least one embodiment of this application. The word "embodiment" appearing in various positions in the specification does not necessarily refer to the same embodiment or an independent or alternative embodiment that is exclusive of other embodiments. Persons skilled in the art explicitly and implicitly understand that the embodiments described herein may combine with another embodiment.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

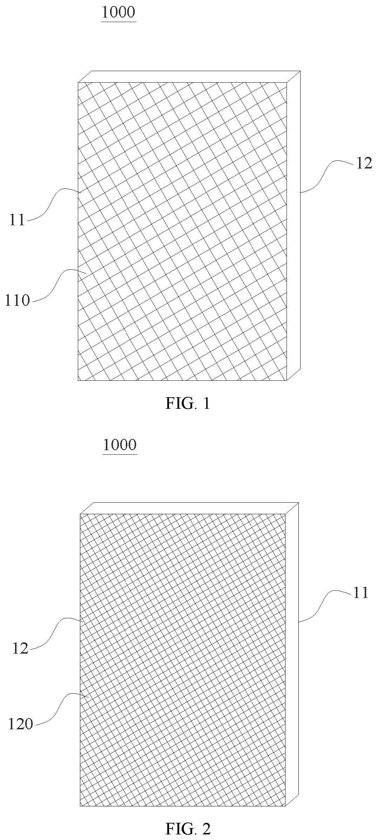

A first aspect of an embodiment of this application provides a separator 1000. Referring to FIGs. 1 and 2, in a thickness direction of the separator 1000, the separator 1000 has a positive electrode end 11 and a negative electrode end 12. The positive electrode end 11 is provided with a plurality of first openings 110, and the negative electrode end 12 is provided with a plurality of second openings 120. An aperture of the first opening 110 is larger than an aperture of the second opening 120.

It should be noted that "the positive electrode end of the separator" can be understood as an end of the separator close to the positive electrode after the positive electrode plate, the separator, and the negative electrode plate are stacked and assembled into a cell. Similarly, "the negative electrode end of the separator" can be understood as an end of the separator close to the negative electrode after the positive electrode plate, the separator, and the negative electrode plate are stacked and assembled into a cell. The term "plurality" means two or more.

The first openings 110 are provided at the positive electrode end 11 of the separator 1000, the second openings 120 are provided at the negative electrode end 120 of the separator 1000, and the aperture of the first opening 110 is larger than the aperture of the second opening 120. In one aspect, during the battery cycling, the volume swelling of the negative electrode plate squeezes the negative electrode end 12 of the separator 1000, causing the negative electrode end 12 to be compressed more than the positive electrode end 11, making the electrolyte between the negative electrode end 12 of the separator 1000 and the negative electrode plate prone to dry out. In this application, with the small-aperture second openings 120 provided at the negative electrode end 12 of the separator 1000, the small-aperture second openings 120 provide good electrolyte retention effect, making the electrolyte between the separator 1000 and the negative electrode plate less likely to dry out, thereby reducing battery capacity loss. In another aspect, the negative electrode end 12 provided with the small-aperture second openings 120 has good compactness, reducing the probability of metal dendrites generated on the surface of the negative electrode plate piercing the separator 1000 and causing a short circuit, thereby improving battery safety. Moreover, with the larger-aperture first openings 110 provided at the positive electrode end 11 and the smaller-aperture second openings 120 provided at the negative electrode end 12, the concentration gradient of metal ion diffusion can be adjusted during the battery charging process, so that metal ions can be evenly deposited on the surface of the negative electrode plate, thereby reducing the generation of metal dendrites and the volume swelling of the negative electrode plate, and improving battery safety. Therefore, use of the separator 1000 of this application can solve the battery capacity loss and safety issues caused by volume swelling of the negative electrode plate during the metal battery cycling process.

When the separator 1000 of this application satisfies the foregoing conditions, the battery capacity loss can be further reduced and the battery safety performance can be further improved if one or more of the following conditions are also satisfied optionally.

In some embodiments, the aperture of the first opening 110 at the positive electrode end 11 of the separator 1000 is 20 nm-1000 $\mu$m, for example, 30 nm-1000 $\mu$m, 40 nm-1000 $\mu$m, 50 nm-1000 $\mu$m, 60 nm-1000 $\mu$m, 70 nm-1000 $\mu$m, 80 nm-1000 $\mu$m, 90 nm-1000 $\mu$m, 100 nm-1000 $\mu$m, 200 nm-1000 $\mu$m, 300 nm-1000 $\mu$m, 400 nm-1000 $\mu$m, 500 nm-1000 $\mu$m, 600 nm-1000 $\mu$m, 700 nm-1000 $\mu$m, 800 nm-1000 $\mu$m, 900 nm-1000 $\mu$m, 1000 nm-1000 $\mu$m, 10 $\mu$m-1000 $\mu$m, 50 $\mu$m-900 $\mu$m, 100 $\mu$m-800 $\mu$m, 150 $\mu$m-750 $\mu$m, 200 $\mu$m-700 $\mu$m, 250 $\mu$m-650 $\mu$m, 300 $\mu$m-600 $\mu$m, 350 $\mu$m-550 $\mu$m, or 400 $\mu$m-500 $\mu$m. If the aperture of the first opening 110 is excessively small, the ion conductivity at the positive electrode end 11 is poor. If the aperture of the first opening 110 is excessively large, the positive electrode end 11 of the separator 1000 will absorb a large amount of electrolyte. During the charge and discharge process, when the negative electrode plate undergoes volume swelling and squeezes the separator 1000, the electrolyte adsorbed by the positive electrode end 11 cannot flow back in time, causing local electrolyte disconnection. This causes uneven deposition on the surface of the negative electrode plate and makes it impossible to block the influence of particles such as powder falling from part of the active material layer of the positive electrode plate from causing local micro short circuits. In some other embodiments, the aperture of the first opening 110 at the positive electrode end 11 is 50 nm-500 $\mu$m.

In some embodiments, the aperture of the second opening 120 at the negative electrode end 12 of the separator 1000 is 20 nm-500 $\mu$m, for example, 30 nm-500 $\mu$m, 40 nm-500 $\mu$m, 50 nm-500 $\mu$m, 60 nm-500 $\mu$m, 70 nm-500 $\mu$m, 80 nm-500 $\mu$m, 90 nm-500 $\mu$m, 100 nm-500 $\mu$m, 200 nm-500 $\mu$m, 300 nm-500 $\mu$m, 400 nm-500 $\mu$m, 500 nm-500 $\mu$m, 600 nm-500 $\mu$m, 700 nm-500 $\mu$m, 800 nm-500 $\mu$m, 900 nm-500 $\mu$m, 1000 nm-500 $\mu$m, 10 $\mu$m-500 $\mu$m, 50 $\mu$m-450 $\mu$m, 100 $\mu$m-400 $\mu$m, 150 $\mu$m-350 $\mu$m, or 200 $\mu$m-300 $\mu$m. Thus, the second openings 120 meeting such aperture can improve the electrolyte retention effect of the negative electrode end 12, making the electrolyte between the separator 1000 and the negative electrode plate less likely to dry out, thereby reducing battery capacity loss. Moreover, such second openings 120 can improve the compactness of the negative electrode end 12, reducing the probability of metal dendrites generated on the surface of the negative electrode plate piercing the separator 1000 and causing a short circuit, thereby improving battery safety. In some other embodiments, the aperture of the second opening 120 at the negative electrode end 12 is 50 nm-100 $\mu$m.

In some embodiments, along a direction from the negative electrode end 12 to the positive electrode end 11, the apertures of the openings in the separator 1000 increase sequentially. Thus, with the openings in the separator 1000 arranged from the negative electrode end 12 to the positive electrode end 11 in ascending order of aperture, the concentration gradient of metal ion diffusion can be further adjusted during the battery charging process, so that metal ions can be evenly deposited on the surface of the negative electrode plate, thereby reducing the generation of metal dendrites and the volume swelling of the negative electrode plate, and improving battery safety.

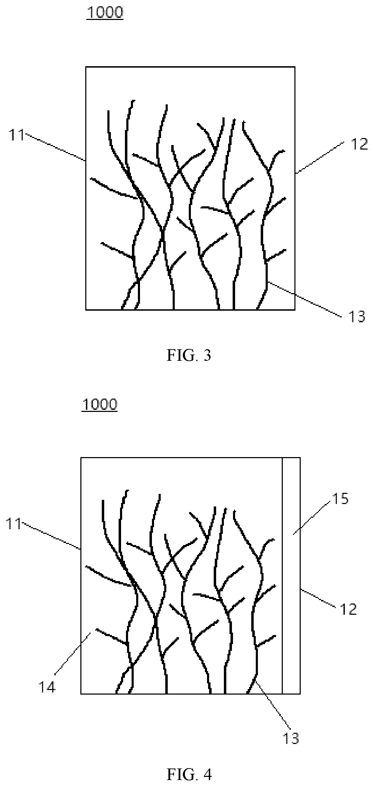

In some embodiments, to further improve the electrolyte retention effect of the separator, referring to FIG. 3, a capillary structure 13 is provided in the separator 1000 along a height direction of the separator 1000, and one end of the capillary structure 13 is flush with a lowermost end of the separator 1000. Thus, when the negative electrode plate undergoes volume swelling and squeezes the separator 1000, the siphoning effect of the capillary can be utilized to siphon the electrolyte from the bottom of the cell into the separator 1000, promptly replenishing the insufficient electrolyte in the height direction of the separator 1000.

In some embodiments, a length $H_1$ of the capillary structure 13 is $\geq 70\%H_2$, where $H_2$ is the height of the separator 1000, for example, $70\%H_2$, $75\%H_2$, $80\%H_2$, $85\%H_2$, $90\%H_2$, $95\%H_2$, or $100\%H_2$. Thus, the electrolyte from the bottom of the cell can be siphoned to the upper part of the separator 1000, promptly replenishing the insufficient electrolyte in the upper part of the separator 1000.

In some embodiments, the capillary structure 13 can adopt a tree-like structure, for example, adopting a main structure with large channels combined with branch structures with small channels, with the branch structures with small channels communicating with the main structure with large channels. This not only allows the electrolyte from the bottom of the cell to be siphoned to the upper layer of the separator 1000 through the main structure with large channels, but also allows the electrolyte to be transported to various layers in the separator 1000 through the branch structures with small channels, thereby promptly replenishing the insufficient electrolyte in the separator 1000.

In some embodiments, a compression modulus of the separator 1000 is 5%-95%, for example, 10%-90%, 20%-80%, 30%-70%, 40%-60%, or 40%-50%. Thus, with the separator 1000 having the compression modulus of this application, when the negative electrode plate undergoes volume swelling, the battery bulge caused by the volume swelling of the negative electrode plate can be effectively alleviated, thereby improving the safety performance of the battery.

According to some examples, the compression modulus of the separator 1000 is measured using a universal testing machine (MDTC-EQ-M12-01), which specifically includes the following steps.

Step 1. Select the separator to be tested: Stack multiple layers of separator, ensure that the thickness of the test sample is ≥1 mm, and control the error precision.

Step 2. Collect the initial thickness: Apply an initial pressure to the separator (try an initial value of ≥0.05 MPa) to obtain the initial thickness of the separator under this constant pressure.

Step 3. Collect the compression modulus: Continuously apply pressure to the separator until the thickness remains unchanged and the pressure/intensity of pressure shows an exponential increase inflection point. At that time, data collection is considered complete. The slope of the start segment of the strain-stress curve corresponds to the compression modulus of this sample. The compression modulus of different target samples can be obtained in this way.

In some embodiments, the separator 1000 is a sponge-based film. It should be noted that the "sponge-based film" can be understood as a film with a sponge-like structure. In an example, its material may include at least one of glass fiber, nanofiber, polyethylene, polypropylene, and non-woven fabric.

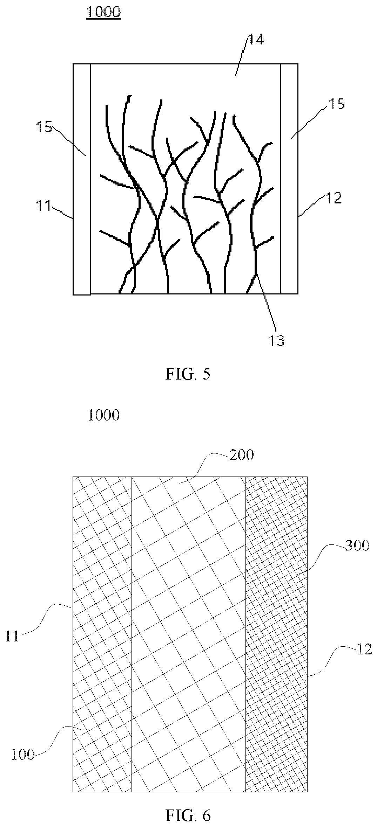

In some embodiments, to further improve the safety performance of the battery, referring to FIGs. 4 and 5, the separator 1000 includes a sponge-based film 14 and a coating 15, the coating 15 is formed on at least one side of the sponge-based film 14, and the capillary structure 13 is provided in the sponge-based film 14. In an example, referring to FIG. 4, the coating 15 is formed on one side of the sponge-based film 14, the second openings 120 are provided on the coating 15, and the first openings 110 are provided on an end of the sponge-based film 11 far away from the coating 15. Thus, with the sponge-based film 14 including the capillary structure 13, the electrolyte retention effect of the separator 1000 can be improved. Moreover, providing the coating 15 on one side of the sponge-based film 14 as the negative electrode end 12 of the separator 1000, with the second openings 120 provided in the coating 15, can significantly improve the puncture resistance and high-temperature resistance of the separator 1000, thereby enhancing the battery safety performance.

In another example, referring to FIG. 5, the coating 15 is formed on both sides of the sponge-based film 14, the second openings 120 are provided on the coating 15 at the negative electrode end 12, and the first openings 110 are provided on the coating 15 at the positive electrode end 11. Thus, with the sponge-based film 14 including the capillary structure 13, the electrolyte retention effect of the separator 1000 can be improved. Moreover, with the coating 15 provided on both sides of the sponge-based film 14, the high-temperature resistance of the separator 1000 can be significantly improved, thereby enhancing the battery safety performance.

In some embodiments, the coating 15 may include an inorganic particle coating or a gel electrolyte coating. In an example, the inorganic particles used in the inorganic particle coating may include one or more of boehmite ($\gamma$-AlOOH), aluminum oxide ($Al_2O_3$), barium sulfate ($BaSO_4$), magnesium oxide (MgO), magnesium hydroxide ($Mg(OH)_2$), silicon dioxide ($SiO_2$), tin dioxide ($SnO_2$), titanium oxide ($TiO_2$), calcium oxide (CaO), zinc oxide (ZnO), zirconium oxide ($ZrO_2$), yttrium oxide ($Y_2O_3$), nickel oxide (NiO), cerium oxide ($CeO_2$), zirconium titanate ($SrTiO_3$), barium titanate ($BaTiO_3$), and magnesium fluoride ($MgF_2$). These inorganic particles have a good inhibitory effect on the thermal shrinkage of the separator, thereby improving the high-temperature resistance and puncture resistance of the separator. In an example, the gel electrolyte in the gel electrolyte coating may include polyvinylidene fluoride (PVDF), polyvinylidene fluoride-hexafluoropropylene copolymer [P(VDFHFP)], polyethylene oxide (PEO), polyacrylonitrile (PAN), polymethyl methacrylate (PMMA), and the like.

In some embodiments, a thickness of the inorganic particle coating is 0.5 $\mu$m-8 $\mu$m, for example, 1 $\mu$m-8 $\mu$m, 1.5 $\mu$m-7.5 $\mu$m, 2 $\mu$m-7 $\mu$m, 2.5 $\mu$m-6.5 $\mu$m, 3 $\mu$m-6 $\mu$m, 3.5 $\mu$m-5.5 $\mu$m, or 4 $\mu$m-5 $\mu$m. Thus, the high-temperature resistance and puncture resistance of the separator can be improved, enhancing the battery safety performance.

In some embodiments, a thickness of the gel electrolyte coating is 5 $\mu$m-15 $\mu$m, for example, 6 $\mu$m-15 $\mu$m, 7 $\mu$m-14 $\mu$m, 8 $\mu$m-13 $\mu$m, 9 $\mu$m-12 $\mu$m, or 10 $\mu$m-11 $\mu$m. Thus, the high-temperature resistance and puncture resistance of the separator can be improved, enhancing the battery safety performance.

In some embodiments, the inorganic particle coating and the gel electrolyte coating may further include a binder. In an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

In some embodiments, the inorganic particle coating and the gel electrolyte coating may further include other organic compounds, for example, may include a polymer for improving heat resistance, a dispersant, a wetting agent, a binder of another type, and the like. This application imposes no particular limitation on types of the foregoing other organic compounds, and any commonly known material with good improvement performance can be selected.

In some embodiments, referring to FIG. 6, the separator 1000 includes a first separator 100, a middle separator 200, and a second separator 300 stacked along a thickness direction of the separator 1000, the first openings 110 are provided on the first separator 100, and the second openings 120 are provided on the second separator 300. In an example, an aperture of the middle separator 200 is larger than an aperture of the first opening 110 or an aperture of the second opening 120; and/or a porosity of the middle separator 200 is larger than a porosity of the first separator 100 or the second separator 300. Thus, with the middle separator 200 having a large aperture and/or a large porosity, more electrolyte can be stored. When the negative electrode plate undergoes volume swelling and squeezes the electrolyte between the negative electrode plate and the separator 1000, the electrolyte stored in the middle separator 200 can promptly replenish the insufficient electrolyte between the negative electrode plate and the separator 1000.

In some embodiments, the aperture of the middle separator 200 is 30 nm-1 $\mu$m, for example, 30 nm-1 $\mu$m, 40 nm-1 $\mu$m, 50 nm-1 $\mu$m, 60 nm-1 $\mu$m, 70 nm-1 $\mu$m, 80 nm-1 $\mu$m, 90 nm-1 $\mu$m, 100 nm-1 $\mu$m, 200 nm-1 $\mu$m, 300 nm-1 $\mu$m, 400 nm-1 $\mu$m, 500 nm-1 $\mu$m, 600 nm-1 $\mu$m, 700 nm-1 $\mu$m, 800 nm-1 $\mu$m, or 900 nm-1 $\mu$m. Thus, the middle separator 200 meeting such aperture can store more electrolyte, so that the insufficient electrolyte between the negative electrode plate and the separator 1000 can be promptly replenished.

In some embodiments, the porosity of the first separator 100 is 30%-70%, for example, 35%-70%, 40%-70%, 45%-70%, 50%-70%, 55%-70%, 60%-70%, or 65%-70%; the porosity of the middle separator 200 is 40%-90%, for example, 45%-90%, 50%-90%, 55%-90%, 60%-90%, 65%-90%, 70%-90%, 75%-90%, 80%-90%, or 85%-90%; and the porosity of the second separator 300 is 30%-70%, for example, 35%-70%, 40%-70%, 45%-70%, 50%-70%, 55%-70%, 60%-70%, or 65%-70%. Thus, the middle separator 200 meeting such porosity can store more electrolyte, so that the insufficient electrolyte between the negative electrode plate and the separator 1000 can be promptly replenished.

According to some examples, the porosities of the first separator 100, the middle separator 200, and the second separator 300 can be determined using the gas displacement method. Specifically, the porosities can be determined with reference to GB/T 24586-2009 through the following steps: Immerse the separator in ethylene methyl carbonate (EMC) for cleaning, and perform measurement using the gas displacement method. The percentage of the opening volume in the separator to the total volume of the separator is the porosity of the separator. The calculation formula is: porosity = $(V-V_0)/V \times 100\%$, where $V_0$ is the true volume, and $V$ is the apparent volume.

A second aspect of this application provides a battery. The battery includes a positive electrode plate, a negative electrode plate, and a separator. The separator is provided between the positive electrode plate and the negative electrode plate. The separator includes the separator according to the first aspect of this application. A positive electrode end of the separator is provided close to the positive electrode plate, and a negative electrode end of the separator is provided close to the negative electrode plate.

In some embodiments of this application, the battery is an alkali metal battery, such as a sodium-ion battery or a lithium metal battery, and the alkali metal battery satisfies the following relationship: $h_2*n_2*k =Es*n_1*z*(C_1*m_1/C_2/\rho)$, where Es is an empirical parameter with a value range of 5%-100%; $C_1$ is a total gram capacity of a single positive electrode plate, in mA-h/g; $m_1$ is a unit weight of the positive electrode active material layer of a single positive electrode plate, in $g/cm^2$; $n_1$ is the number of layers of positive electrode plates in a single cell; z is the number of coated surfaces of a single positive electrode plate; $C_2$ is a theoretical gram capacity corresponding to alkali metal of the alkali metal battery, in mA·h/g; $\rho$ is a theoretical density of the alkali metal, in $g/cm^3$; $h_2$ is a thickness of a single separator, in cm; $n_2$ is the number of layers of separators in a single cell; and k is a compression percentage of a single separator. Thus, the battery has a small volume change during the charge and discharge cycle.

According to some examples, the method for measuring the total gram capacity of a single positive electrode plate includes: disassembling the positive electrode plate, assembling a half-cell, and testing the gram capacity performance at a rate of 0.33C at 25°C, so as to obtain the total gram capacity of a single positive electrode plate. The method for measuring the unit weight of the positive electrode active material layer of a single positive electrode plate includes: punching small discs of the positive electrode plate with a fixed diameter, weighing 10 samples, and deducting the mass of the substrate from the average mass to obtain the unit weight of the positive electrode active material layer of a single positive electrode plate. The compression percentage of the separator is measured using a universal testing machine (MDTC-EQ-M12-01), with the compression percentage of the separator = (initial thickness of the separator - thickness of the compressed separator)/initial thickness of the separator.

The battery is a battery that can be charged after being discharged, to activate active materials for continuous use.

Typically, the battery includes a positive electrode plate, a negative electrode plate, a separator, and an electrolyte. In a charge and discharge process of the battery, active ions are intercalated and deintercalated between the positive electrode plate and the negative electrode plate. The separator is disposed between the positive electrode plate and the negative electrode plate to provide separation. The electrolyte conducts ions between the positive electrode plate and the negative electrode plate.

In some embodiments, the battery may be a lithium-ion battery or a sodium-ion battery.

[Positive electrode plate]

In the battery, the positive electrode plate typically includes a positive electrode current collector and a positive electrode active material layer provided on the positive electrode current collector. The positive electrode active material layer includes a positive electrode active material.

The positive electrode current collector may be a common metal foil sheet or a composite current collector (the composite current collector may be made by providing a metal material on a polymer matrix). In an example, an aluminum foil may be used as the positive electrode current collector.

A specific type of the positive electrode active material is not limited. An active material known in the art that can be used as the positive electrode of the battery can be used, and those skilled in the art may select an active material based on actual needs.

For example, when the battery is a lithium-ion battery, in an example, the positive electrode active material may include but is not limited to one or more of lithium transition metal oxide, olivine-structured lithium-containing phosphate, and modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include but are not limited to one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof. These materials are all commercially available.

For example, when the battery is a sodium-ion battery, in an example, the positive electrode active material may include but is not limited to at least one of layered transition metal oxide, polyanion compound, and Prussian blue analog.

Examples of the layered transition metal oxide may include, for example,

$Na_{1-x}Cu_hFe_kMniM^1_mO_{2-y}$, where $M^1$ is one or more of Li, Be, B, Mg, Al, K, Ca, Ti, Co, Ni, Zn, Ga, Sr, Y, Nb, Mo, In, Sn, and Ba, $0<x\leq0.33$, $0<h\leq0.24$, $0\leq k\leq0.32$, $0<1\leq0.68$, $0\leq m<0.1$, $h+k+l+m=1$, and $0\leq y<0.2$;
$Na_{0.67}Mn_{0.7}Ni_zM^2_{0.3-z}O_2$, where $M^2$ is one or more of Li, Mg, Al, Ca, Ti, Fe, Cu, Zn, and Ba, and $0<z\leq0.1$; and
$Na_aLi_bNi_cMn_aFe_eO_2$, where $0.67<a\leq1$, $0<b<0.2$, $0<c<0.3$, $0.67<d+e<0.8$, and $b+c+d+e=1$.

Examples of the polyanion compound may include, for example,

$A^1_fM^3_g(PO_4)_iO_jX^1_{3-j}$, where A is one or more of H, Li, Na, K, and $NH_4$, $M^3$ is one or more of Ti, Cr, Mn, Fe, Co, Ni, V, Cu, and Zn, $X^1$ is one or more of F, Cl, and Br, $0<f\leq4$, $0<g\leq2$, $1\leq i\leq3$, and $0\leq j\leq2$;
$Na_nM^4PO_4X^2$, where $M^4$ is one or more of Mn, Fe, Co, Ni, Cu, and Zn, X2 is one or more of F, Cl, and Br, and $0<n\leq2$;
$Na_pM^5_q(SO_4)_3$, where $M^5$ is one or more of Mn, Fe, Co, Ni, Cu, and Zn, $0<p\leq2$, and $0<q\leq2$; and
$Na_sMn_tFe_{3-t}(PO_4)_2(P_2O_7)$, where $0<s\leq4$, and $0\leq t\leq3$, for example, t is 0, 1, 1.5, 2, or 3.

Examples of the Prussian blue analog may include, for example,
$A_uM^6_v[M^7(CN)_6]_w\cdot xH2O$, where A is one or more of $H^+$, $NH^{4+}$, alkali metal cation, and alkaline-earth metal cation, $M^6$ and $M^7$ are each independently one or more of transition metal cations, $0<u\leq2$, $0<v\leq1$, $0<w\leq1$, and $0<x<6$. For example, A is one or more of $H^+$, $Li^+$, $Na^+$, $K^+$, $NH_4^+$, $Rb^+$, $Cs^+$, $Fr^+$, $Be^{2+}$, $Mg^{2+}$, $Ca^{2+}$, $Sr^{2+}$, $Ba^{2+}$, and $Ra^{2+}$, and $M^6$ and $M^7$ are each independently a cation of one or more transition metal elements selected from Ti, V, Cr, Mn, Fe, Co, Ni, Cu, Zn, Sn, and W.

The modified compounds of the foregoing materials may be obtained through doping modification and/or surface coating modification to the materials.

The positive electrode active material layer usually further optionally includes a binder, a conductive agent, and other optional adjuvants.

In an example, the conductive agent may be one or more of superconducting carbon, acetylene black, carbon black, Ketjen black, carbon dots, carbon nanotubes, Super P (SP), graphene, and carbon nanofibers.

In an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

[Negative electrode plate]

In the battery, the negative electrode plate typically includes a negative electrode current collector and a negative electrode active material layer provided on the negative electrode current collector. The negative electrode active material layer includes a negative electrode active material.

The negative electrode current collector may be a common metal foil sheet or a composite current collector (for example, the composite current collector may be made by providing a metal material on a polymer matrix). In an example, a copper foil may be used as the negative electrode current collector.

A specific type of the negative electrode active material is not limited. An active material known in the art that can be used as the negative electrode of the battery can be used, and those skilled in the art may select an active material based on actual needs. In an example, the negative electrode active material may include but is not limited to one or more of artificial graphite, natural graphite, hard carbon, soft carbon, silicon-based material, and tin-based material. The silicon-based material may include one or more of elemental silicon, silicon-oxygen compound (for example, silicon monoxide), silicon-carbon composite, silicon-nitrogen composite, and silicon alloy. The tin-based material may include one or more of elemental tin, tin-oxygen compound, and tin alloy. These materials are all commercially available.

In some embodiments, the negative electrode active material may include a silicon-based material to further increase the energy density of the battery.

The negative electrode active material layer usually further optionally includes a binder, a conductive agent, and other optional adjuvants.

In an example, the conductive agent may be one or more of superconducting carbon, acetylene black, carbon black, Ketjen black, carbon dots, carbon nanotubes, graphene, and carbon nanofibers.

In an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyvinyl alcohol (PVA), and polyvinyl butyral (PVB).

In an example, the other optional adjuvants may be, for example, a thickening and dispersing agent (such as sodium carboxymethyl cellulose CMC-Na) and a PTC thermistor material.

[Electrolyte]

The battery may include an electrolyte, and the electrolyte conducts ions between the positive electrode and the negative electrode. The electrolyte may include an electrolytic salt and a solvent.

When the battery is a lithium-ion battery, in an example, the electrolytic salt may include one or more selected from a group consisting of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bistrifluoromethanesulfonimide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluorodioxalate phosphate (LiDFOP), and lithium tetrafluoro oxalato phosphate (LiTFOP).

When the battery is a sodium-ion battery, in an example, the electrolyte sodium salt includes at least one of sodium hexafluorophosphate, sodium difluoro(oxalato)borate, sodium tetrafluoroborate, sodium bis(oxalato)borate, sodium perchlorate, sodium hexafluoroarsenate, sodium bis(fluorosulfonyl)imide, sodium trifluoromethanesulfonate, and sodium bis(trifluoromethanesulfonyl)imide.

In an example, the solvent may include one or more selected from a group consisting of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-gamma-butyrolactone (GBL), sulfolane (SF), methyl sulfonyl methane (MSM), ethyl methanesulfonate (EMS), and diethyl sulfone (ESE).

In some embodiments, the electrolyte further includes an additive. For example, the additive may include a negative electrode film-forming additive, or may include a positive electrode film-forming additive, or may include an additive capable of improving some performance of the battery, for example, an additive for improving overcharge resistance performance of the battery, an additive for improving high-temperature performance of the battery, or an additive for improving low-temperature performance of the battery.

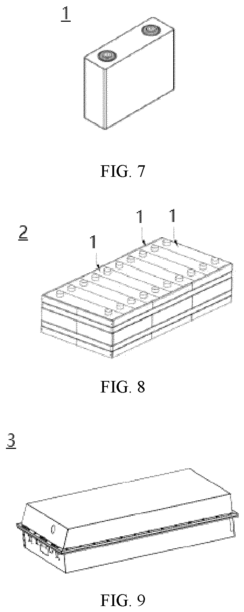

The embodiments of this application do not impose any special limitations on a shape of the battery, and the battery may be cylindrical, rectangular, or of any other shapes. FIG. 7 shows a rectangular battery 1 as an example.

In some embodiments, the battery may include an outer package. The outer package is used for packaging a positive electrode plate, a negative electrode plate, and an electrolyte.

In some embodiments, the outer package may include a housing and a cover plate. The housing may include a base plate and side plates connected onto the base plate, and the base plate and the side plates enclose an accommodating cavity. The housing has an opening communicating with the accommodating cavity, and the cover plate can cover the opening to close the accommodating cavity.

The positive electrode plate, the negative electrode plate, and the separator may be made into an electrode assembly through winding or lamination. The electrode assembly is packaged in the accommodating cavity. The electrolyte may be a liquid electrolyte, and the liquid electrolyte infiltrates into the electrode assembly. There may be one or more electrode assemblies in the battery, and the quantity may be adjusted as required.

In some embodiments, the outer package of the battery may be a hard shell, for example, a hard plastic shell, an aluminum shell, or a steel shell.

The outer package of the battery may alternatively be a soft pack, for example, a soft pouch. A material of the soft package may be plastic, for example, may include one or more of polypropylene (PP), polybutylene terephthalate (PBT), and polybutylene succinate (PBS).

In some embodiments, batteries may be assembled into a battery module, and the battery module may include a plurality of batteries. A specific quantity may be adjusted based on application and capacity of the battery module.

FIG. 8 shows a battery module 2 as an example. Referring to FIG. 8, in the battery module 2, a plurality of batteries 1 may be sequentially arranged in a length direction of the battery module 2. Certainly, the batteries may alternatively be arranged in any other manner. Further, the plurality of batteries 1 may be fastened through fasteners.

The battery module 2 may further include a shell with an accommodating space, and the plurality of secondary batteries 1 are accommodated in the accommodating space. In some embodiments, the battery module may be further assembled into a battery pack, and a quantity of battery modules included in the battery pack may be adjusted based on application and capacity of the battery pack.

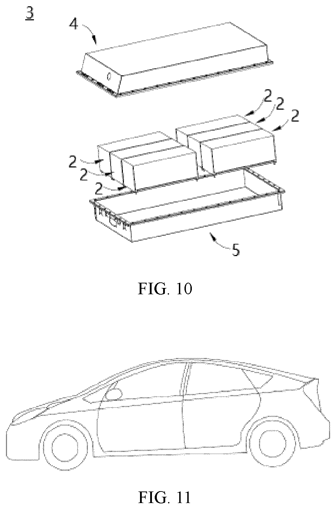

FIG. 9 and FIG. 10 show a battery pack 3 as an example. Referring to FIG. 9 and FIG. 10, the battery pack 3 may include a battery box and a plurality of battery modules 2 arranged in the battery box. The battery box includes an upper box body 4 and a lower box body 5. The upper box body 4 can cover the lower box body 5 to form an enclosed space for accommodating the battery modules 2. The plurality of battery modules 2 may be arranged in the battery box in any manner.

[Electric apparatus]

This application further provides an electric apparatus. The electric apparatus includes the foregoing battery, where the battery is configured to supply electric energy. Specifically, the battery may be used as a power source of the electric apparatus, and may also be used as an energy storage unit of the electric apparatus. The electric apparatus may be but is not limited to a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

FIG. 11 shows an electric apparatus as an example. The electric apparatus is a battery electric vehicle, a hybrid electric vehicle, or a plug-in hybrid electric vehicle.

In another example, the electric apparatus may be a mobile phone, a tablet computer, or a notebook computer. Such electric apparatus is generally required to be light and thin and may use a battery as its power source.

To describe the technical problems solved by the embodiments of this application, technical solutions, and beneficial effects more clearly, the following further provides descriptions in detail with reference to the embodiments and accompanying drawings. Apparently, the described embodiments are only some but not all of the embodiments of this application. The following description of at least one example embodiment is merely illustrative and definitely is not construed as any limitation on this application or on use of this application. All other embodiments obtained by persons of ordinary skill in the art based on the embodiments of this application without creative efforts shall fall within the protection scope of this application.

I. The preparation method of the separator 1 includes:

preparing the separator using electrospinning, where the spinning solution is a polyethylene solution; keeping the receiving distance at 15-18 cm, and adjusting the receiving roller speed to 200 r/min, the liquid spray speed to 10 mL/h, and the voltage to 23 KV, to obtain the positive electrode end of the separator with a first aperture of 30 nm; and adjusting the receiving roller speed to 150 r/min, the liquid spray speed to 10 mL/h, and the voltage to 23 KV to obtain the negative electrode end of the separator with a second aperture of 20 nm.

The preparation methods of the separators 2 to 9 are the same as that of the separator 1, with the differences shown in Table 1.

**Table 1**

|  | Positive electrode end | | | | Negative electrode end | | | |
|---|---|---|---|---|---|---|---|---|
|  | Receiving roller speed (r/min) | Liquid spray speed (mL/h) | Voltage (KV) | Aperture of first opening | Receiving roller speed (r/min) | Liquid spray speed (mL/h) | Voltage (KV) | Aperture of second opening |
| Separator 1 | 200 | 10 | 23 | 30nm | 150 | 10 | 23 | 20nm |

(continued)

| | Positive electrode end | | | | Negative electrode end | | | |
|---|---|---|---|---|---|---|---|---|
| | Receiving roller speed (r/min) | Liquid spray speed (mL/h) | Voltage (KV) | Aperture of first opening | Receiving roller speed (r/min) | Liquid spray speed (mL/h) | Voltage (KV) | Aperture of second opening |
| Separator 2 | 250 | 9 | 22 | 50nm | 200 | 10 | 23 | 30nm |
| Separator 3 | 300 | 8 | 20 | 100nm | 250 | 9 | 22 | 50nm |
| Separator 4 | 500 | 5 | 19 | 500nm | 350 | 6 | 20 | 200nm |
| Separator 5 | 600 | 1 | 18 | 1000nm | 500 | 5 | 19 | 500nm |
| Separator 6 | 1000 | 0.5 | 18 | 20μm | 700 | 0.5 | 18 | 10μm |
| Separator 7 | 1200 | 0.5 | 18 | 500μm | 1050 | 0.5 | 18 | 300μm |
| Separator 8 | 1600 | 0.3 | 18 | 800μm | 1200 | 0.5 | 18 | 500μm |
| Separator 9 | 2000 | 0.3 | 18 | 1000μm | 1600 | 0.3 | 18 | 800μm |

II. The preparation method of the separator 10 includes:
with a polyethylene solution as the spinning solution, using electrospinning to synchronously spray the polyethylene film capillary structure and the separator of the target length, covering the separator with the capillary structure film when the separator is sprayed to about half the target thickness, and continuing to complete the spraying of the remaining thickness of the separator; or using a dual-needle electrospinning device to make a composite separator with a composite capillary structure through intermittent spraying; where the first aperture at the positive electrode end of the separator is 20 μm, the second aperture at the negative electrode end of the separator is 10 μm, and the height $H_1$ of the capillary structure in the separator is 70%$H_2$, $H_2$ being the height of the separator.

The preparation methods of the separators 11 to 13 are the same as that of the separator 10, with the differences shown in Table 2.

**Table 2**

| | Positive electrode end | | Negative electrode end | | Capillary structure |
|---|---|---|---|---|---|
| | Material | Aperture of first opening | Material | Aperture of second opening | Length $H_1$ |
| Separator 10 | Polyethylene | 20μm | Polyethylene | 10μm | 70$H_2$ |
| Separator 11 | Polyethylene | 20μm | Polyethylene | 10μm | 80$H_2$ |
| Separator 12 | Polyethylene | 20μm | Polyethylene | 10μm | 90$H_2$ |
| Separator 13 | Polyethylene | 20μm | Polyethylene | 10μm | 100$H_2$ |

III. The preparation method of the separator 14 includes:

(1) preparing a sponge-based film having a capillary structure: with a polyethylene solution as the spinning solution, using electrospinning to synchronously spray the polyethylene film capillary structure and the separator of the target length, covering the separator with the capillary structure film when the separator is sprayed to about half the target thickness, and continuing to complete the spraying of the remaining thickness of the separator to obtain a sponge-based film having a capillary structure; or using a dual-needle electrospinning device to make a sponge-based film having a composite capillary structure through intermittent spraying; where the aperture of the sponge-based film is 20 μm, and the height $H_1$ of the capillary structure in the separator is 80%$H_2$, $H_2$ being the height of the separator; and
(2) mixing inorganic particles of aluminum trioxide (with $D_v50$ of 1.5 μm) with a binder polyvinylidene fluoride (with the mass ratio of the inorganic particles to the binder polyvinylidene fluoride being 99: 1), and applying a resulting inorganic particle slurry to one side surface of the sponge-based film, followed by drying to form an inorganic particle coating on one side surface of the sponge-based film, where the aperture of the inorganic particle coating is 10 μm, and the thickness is 3 μm.

The preparation methods of the separators 15 and 16 are the same as that of the separator 14, with the differences shown in Table 3.

**Table 3**

| | Sponge-based film | | | Inorganic particle coating | | |
|---|---|---|---|---|---|---|
| | Material | Aperture of first opening ($\mu$m) | Height $H_1$ of capillary structure | Composition | Aperture of second opening ($\mu$m) | Thickness ($\mu$m) |
| Separator 14 | Polyethylene | 20 | 80%$H_2$ | Aluminum trioxide | 10 | 3 |
| Separator 15 | Polyethylene | 20 | 80%$H_2$ | Aluminum trioxide | 10 | 5 |
| Separator 16 | Polyethylene | 20 | 80%$H_2$ | Aluminum trioxide | 10 | 8 |

IV. The preparation method of the separator 17 includes:

(1) preparing a sponge-based film having a capillary structure: with a polyethylene solution as the spinning solution, using electrospinning to synchronously spray the polyethylene film capillary structure and the separator of the target length, covering the separator with the capillary structure film when the separator is sprayed to about half the target thickness, and continuing to complete the spraying of the remaining thickness of the separator to obtain a sponge-based film having a capillary structure; or using a dual-needle electrospinning device to make a sponge-based film having a composite capillary structure through intermittent spraying; where the aperture of the sponge-based film is 20 $\mu$m, and the height $H_1$ of the capillary structure in the separator is 80%$H_2$, $H_2$ being the height of the separator; and (2) mixing inorganic particles aluminum trioxide (with $D_v50$ being 1.0 $\mu$m) with a binder polyvinylidene fluoride (with the mass ratio of the inorganic particles to the binder polyvinylidene fluoride being 99: 1), and applying a resulting inorganic particle slurry to one side surface of the sponge-based film, followed by drying to form a first inorganic particle coating as the positive electrode end of the separator, where the aperture of the first inorganic particle coating at the positive electrode end is 20 $\mu$m, and the thickness is 3 $\mu$m; and mixing inorganic particles aluminum trioxide (with $D_v50$ being 1.5 $\mu$m) with a binder polyvinylidene fluoride (with the mass ratio of the inorganic particles to the binder polyvinylidene fluoride being 99:1), and applying a resulting inorganic particle slurry on the other side surface of the sponge-based film, followed by drying to form a second inorganic particle coating as the negative electrode end of the separator, where the aperture of the second inorganic particle coating at the negative electrode end is 10 $\mu$m, and the thickness is 5 $\mu$m.

In this application, $D_v50$ is a corresponding particle size when a cumulative volume percentage reaches 50%. In this application, the $D_v50$ of the inorganic particles aluminum trioxide can be determined using the laser diffraction particle size analysis method, for example, determined using a laser particle size analyzer (for example, Malvern Master Size 3000) with reference to the standard GB/T 19077-2016.

The preparation methods of the separators 18 and 19 are the same as that of the separator 17, with the differences shown in Table 4.

**Table 4**

| | Sponge-based film | | | First inorganic particle coating | | | Second inorganic particle coating | | |
|---|---|---|---|---|---|---|---|---|---|
| | Material | Aperture (μm) | Height $H_1$ of capillary structure | Composition | Aperture of first opening (μm) | Thickness (μm) | Composition | Aperture of second opening (μm) | Thickness (μm) |
| Separator 17 | Polyethylene | 20 | 80%$H_2$ | Aluminum trioxide | 20 | 3 | Aluminum trioxide | 10 | 5 |
| Separator 18 | Polyethylene | 20 | 80%$H_2$ | Aluminum trioxide | 20 | 3 | Aluminum trioxide | 10 | 7 |
| Separator 19 | Polyethylene | 20 | 80%$H_2$ | Aluminum trioxide | 20 | 3 | Aluminum trioxide | 10 | 8 |

A polyethylene-based film is used as the separator 20, where the aperture at both the positive electrode end and the negative electrode end of the polyethylene-based film is 20 $\mu$m.

The preparation method of the separator 21 includes: mixing inorganic particles aluminum trioxide (with D$_v$50 being 1 $\mu$m) with a binder polyvinylidene fluoride (with the mass ratio of the inorganic particles to the binder polyvinylidene fluoride being 99:1), and applying a resulting inorganic particle slurry to both side surfaces of the polyethylene-based film, followed by drying to form an inorganic particle coating with a thickness of 3 $\mu$m on both side surfaces of the polyethylene-based film, where the aperture of the inorganic particle coating is 20 $\mu$m.

V. Preparation of battery

Example 1

1. Preparation of positive electrode plate

A binder polyvinylidene fluoride was fully dissolved in N-methylpyrrolidone, and then a conductive agent carbon black and a positive electrode active material Na$_4$Fe$_3$(PO$_4$)$_2$P$_2$O$_7$ were added to produce a uniformly dispersed positive electrode slurry (a mass ratio of the polyvinylidene fluoride, conductive agent carbon black, and positive electrode active material Na$_4$Fe$_3$(PO$_4$)$_2$P$_2$O$_7$ was 10:10:80). The positive electrode slurry was evenly applied onto two surfaces of the aluminum foil which was then transferred to a vacuum drying oven and fully dried. The obtained electrode plate was rolled and finally punched to obtain a positive electrode plate.

2. Preparation of negative electrode plate

A negative electrode active material artificial graphite, a conductive agent carbon black (Super P), a binder styrene-butadiene rubber (SBR), and sodium carboxymethyl cellulose (CMC) were mixed to uniformity at a mass ratio of 96.4:0.7:1.8:1.1 in an appropriate amount of solvent deionized water to obtain a negative electrode slurry. The negative electrode slurry was applied on a negative electrode current collector copper foil, followed by processes of drying, cold pressing, slitting, and cutting to obtain a negative electrode plate.

3. Separator

The separator 1 prepared above was used as the separator.

4. Preparation of electrolyte

Ethylene carbonate (EC) and ethyl methyl carbonate (EMC) were mixed at a mass ratio of30:70 to obtain an organic solvent. Fully dried electrolytic salt NaPF$_6$ was dissolved in the above mixed solvent, with a concentration of the electrolytic salt being 1.0 mol/L. Then, the resulting product was well mixed to obtain an electrolyte.

5. Preparation of battery

The positive electrode plate, the separator, and the negative electrode plate were sequentially stacked so that the separator was located between the positive electrode plate and the negative electrode plate to provide separation. Then, the resulting stack was wound to form an electrode assembly. The electrode assembly was placed in the outer package and the prepared electrolyte was injected into the lithium-ion battery that was dried, followed by processes including vacuum packaging, standing, formation, and shaping, to obtain a sodium-ion battery.

The separators 2 to 19 shown in Tables 1 to 4 were respectively used as the separators of the sodium-ion batteries in Examples 2 to 19. The separators 20 and 21 were respectively used as the separators of the sodium-ion batteries in Comparative examples 1 and 2.

VI. Battery performance test

Battery cycle life: The number of cycles when the battery capacity retention rate decays to 80%. Taking the battery of Example 1 as an example, the battery capacity retention rate test process was as follows: The battery was charged at 0.33C to a cut-off voltage of 4.35 V, constant-voltage charged at the cut-off voltage of 4.35 V to a current of 0.05C, and discharged at 0.33C to a cut-off voltage of 2.8 V, and the discharge capacity of the first cycle was recorded. Then n charge and discharge cycles were performed, and the discharge capacity of the n-th cycle was recorded. Cycling capacity retention rate = (discharge capacity of the n-th cycle/discharge capacity of the first cycle) $\times$ 100%. Five parallel

samples were tested, the worst and best data were removed, and the average value of the remaining three samples was used, accurate to the tenth place (rounding principle), to obtain the battery cycle life.

The performance test results of the sodium-ion batteries in Examples 1 to 19 and Comparative examples 1 and 2 are shown in Table 5.

**Table 5**

| | Battery cycle life (capacity retention rate 80%) (cycle) |
|---|---|
| Example 1 | 640 |
| Example 2 | 830 |
| Example 3 | 1350 |
| Example 4 | 1550 |
| Example 5 | 1620 |
| Example 6 | 1770 |
| Example 7 | 950 |
| Example 8 | 710 |
| Example 9 | 580 |
| Example 10 | 2140 |
| Example 11 | 2290 |
| Example 12 | 2310 |
| Example 13 | 2360 |
| Example 14 | 2320 |
| Example 15 | 2360 |
| Example 16 | 2390 |
| Example 17 | 2450 |
| Example 18 | 2480 |
| Example 19 | 2490 |
| Comparative example 1 | 300 |
| Comparative example 2 | 20 |

The aperture at the negative electrode end of the separator in the sodium-ion batteries of Examples 1 to 19 is smaller than that at the positive electrode end, while the aperture at the negative electrode end of the separator used in the sodium-ion batteries of Comparative examples 1 and 2 is the same as that at the positive electrode end. The data in Table 5 shows that the cycle life of the sodium-ion batteries in Examples 1 to 19 is significantly better than that in Comparative examples 1 and 2. This indicates that compared with the separator in the prior art, the separator of this application with a larger aperture at the negative electrode end than at the positive electrode end can reduce battery capacity loss and improve battery safety performance.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the implementations can be combined in any manners. This application is not limited to the specific embodiments disclosed in this specification but includes all technical solutions falling within the scope of the claims.

**Claims**

1.  A separator, wherein in a thickness direction of the separator, the separator has a positive electrode end and a negative electrode end, the positive electrode end is provided with a plurality of first openings, the negative electrode end is provided with a plurality of second openings, and an aperture of the first opening is larger than an aperture of the second opening.

2.  The separator according to claim 1, wherein the aperture of the first opening is 20 nm-1000 $\mu$m, preferably 50 nm-500 $\mu$m.

3.  The separator according to claim 1 or 2, wherein the aperture of the second opening is 20 nm-500 $\mu$m, preferably 50 nm-100 $\mu$m.

4.  The separator according to any of claims 1 to 3, wherein along a direction from the negative electrode end to the positive electrode end, the apertures of the openings in the separator increase sequentially.

5.  The separator according to any of claims 1 to 4, wherein a capillary structure is provided in the separator along a height direction of the separator, and one end of the capillary structure is flush with a lowermost end of the separator.

6.  The separator according to claim 5, wherein a length $H_1$ of the capillary structure is $\geq 70\% H_2$, and $H_2$ is a height of the separator.

7.  The separator according to any of claims 1 to 5, wherein a compression modulus of the separator is 5%-95%.

8.  The separator according to any of claims 1 to 7, wherein the separator is a sponge-based film.

9.  The separator according to any of claims 1 to 8, wherein the separator comprises a sponge-based film and a coating, the coating is formed on at least one side of the sponge-based film, and the capillary structure is provided in the sponge-based film.

10. The separator according to claim 8 or 9, wherein the sponge-based film comprises at least one of glass fiber, nanofiber, polyethylene, polypropylene, and non-woven fabric.

11. The separator according to claim 9 or 10, wherein the coating is formed on one side of the sponge-based film, the second openings are provided on the coating, and the first openings are provided on an end of the sponge-based film far away from the coating.

12. The separator according to any one of claims 9 to 11, wherein the coating is formed on both sides of the sponge-based film, the second openings are provided on the coating at the negative electrode end, and the first openings are provided on the coating at the positive electrode end.

13. The separator according to any one of claims 1 to 12, wherein the separator comprises a first separator, a middle separator, and a second separator stacked along a thickness direction of the separator, the first openings are provided on the first separator, and the second openings are provided on the second separator.

14. The separator according to any one of claims 1 to 13, wherein an aperture of the middle separator is larger than the aperture of the first opening or the aperture of the second opening; and/or
    a porosity of the middle separator is larger than a porosity of the first separator or the second separator.

15. The separator according to any one of claims 1 to 14, wherein the first separator, the middle separator, and the second separator satisfy at least one of the following conditions:

    the porosity of the first separator is 30%-70%;
    the aperture of the middle separator is 30 nm-1 $\mu$m;
    the porosity of the middle separator is 40%-90%; and
    the porosity of the second separator is 30%-70%.

16. A battery, wherein the battery comprises a positive electrode plate, a negative electrode plate, and the separator, the separator is provided between the positive electrode plate and the negative electrode plate, the separator comprises the separator according to any one of claims 1 to 15, the positive electrode end of the separator is provided close to the positive electrode plate, and the negative electrode end of the separator is provided close to the negative electrode plate.

17. The battery according to claim 16, wherein the battery is an alkali metal battery, and the alkali metal battery satisfies the following relationship:

$$h_2*n_2*k = Es*n_1*z*(C_1*m_1/C_2/\rho)$$

wherein Es is an empirical parameter with a value range of 5%-100%;
$C_1$ is a total gram capacity of a single positive electrode plate, in mA-h/g;
$m_1$ is a unit weight of the positive electrode active material layer of a single positive electrode plate, in $g/cm^2$;
$n_1$ is the number of layers of positive electrode plates in a single cell;
z is the number of coated surfaces of a single positive electrode plate;
$C_2$ is a theoretical gram capacity corresponding to alkali metal of the alkali metal battery, in mA·h/g;
$\rho$ is a theoretical density of the alkali metal, in $g/cm^3$;
$h_2$ is a thickness of a single separator, in cm;
$n_2$ is the number of layers of separators in a single cell; and
k is a compression percentage of a single separator.

18. An electric apparatus, comprising the battery according to claim 16 or 17, wherein the battery is configured to provide electric energy.

1000

FIG. 1

1000

FIG. 2

1000

FIG. 3

1000

FIG. 4

1000

14

15

15

11

12

13

FIG. 5

1000

200

300

11

12

100

FIG. 6

FIG. 7

FIG. 8

FIG. 9

FIG. 10

FIG. 11

## INTERNATIONAL SEARCH REPORT

| International application No. |
| --- |
| **PCT/CN2023/116819** |

**A.     CLASSIFICATION OF SUBJECT MATTER**

H01M50/463(2021.01)i;  H01M50/489(2021.01)i;  H01M50/491(2021.01)i

According to International Patent Classification (IPC) or to both national classification and IPC

**B.     FIELDS SEARCHED**

Minimum documentation searched (classification system followed by classification symbols)

IPC：H01M50/-

Documentation searched other than minimum documentation to the extent that such documents are included in the fields searched

Electronic data base consulted during the international search (name of data base and, where practicable, search terms used)

CNTXT, DWPI, ENTXT, ENTXTC, CJFD: 二次电池, 隔离膜, 隔膜, 隔板, 孔径, 直径, 孔隙率, secondary battery, separator, diameter, porosity

**C.     DOCUMENTS CONSIDERED TO BE RELEVANT**

| Category* | Citation of document, with indication, where appropriate, of the relevant passages | Relevant to claim No. |
| --- | --- | --- |
| X | CN 104362276 A (CHINA LUCKY GROUP CORPORATION) 18 February 2015 (2015-02-18) description, paragraphs 0007-0018 | 1-4, 7-16, 18 |
| Y | CN 104362276 A (CHINA LUCKY GROUP CORPORATION) 18 February 2015 (2015-02-18) description, paragraphs 0007-0018 | 5-16, 18 |
| Y | CN 113782915 A (HEFEI GUOXUAN HIGH-TECH POWER ENERGY CO., LTD.) 10 December 2021 (2021-12-10) description, paragraphs 0005-0023 | 5-16, 18 |
| A | CN 114144930 A (LG ENERGY SOLUTION LTD.) 04 March 2022 (2022-03-04) description, paragraphs 0046 and 0053 | 1-18 |
| A | CN 108258299 A (HANGZHOU HUAXUAN INFORMATION TECHNOLOGY CO., LTD.) 06 July 2018 (2018-07-06) entire document | 1-18 |
| A | CN 111211279 A (NINGDE AMPEREX TECHNOLOGY LTD.) 29 May 2020 (2020-05-29) entire document | 1-18 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 November 2023** | **10 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/116819**

### C. DOCUMENTS CONSIDERED TO BE RELEVANT

| Category* | Citation of document, with indication, where appropriate, of the relevant passages | Relevant to claim No. |
|---|---|---|
| A | CN 114614200 A (NINGDE AMPEREX TECHNOLOGY LTD.) 10 June 2022 (2022-06-10) entire document | 1-18 |
| A | US 2004053122 A1 (TOMOEGAWA PAPER CO., LTD.) 18 March 2004 (2004-03-18) entire document | 1-18 |
| A | WO 2012120579 A1 (PANASONIC CORP. et al.) 13 September 2012 (2012-09-13) entire document | 1-18 |

Form PCT/ISA/210 (second sheet) (July 2022)

## INTERNATIONAL SEARCH REPORT
### Information on patent family members

International application No.

**PCT/CN2023/116819**

| Patent document cited in search report | | | Publication date (day/month/year) | Patent family member(s) | | | Publication date (day/month/year) |
|---|---|---|---|---|---|---|---|
| CN | 104362276 | A | 18 February 2015 | JP | 2016085980 | A | 19 May 2016 |
| | | | | JP | 6225974 | B2 | 08 November 2017 |
| | | | | KR | 20160049492 | A | 09 May 2016 |
| CN | 113782915 | A | 10 December 2021 | | None | | |
| CN | 114144930 | A | 04 March 2022 | WO | 2021054653 | A1 | 25 March 2021 |
| | | | | EP | 3989350 | A1 | 27 April 2022 |
| | | | | EP | 3989350 | A4 | 26 October 2022 |
| | | | | US | 2022399613 | A1 | 15 December 2022 |
| | | | | KR | 20210033692 | A | 29 March 2021 |
| CN | 108258299 | A | 06 July 2018 | | None | | |
| CN | 111211279 | A | 29 May 2020 | US | 2020168872 | A1 | 28 May 2020 |
| | | | | US | 11575178 | B2 | 07 February 2023 |
| CN | 114614200 | A | 10 June 2022 | | None | | |
| US | 2004053122 | A1 | 18 March 2004 | EP | 1401037 | A2 | 24 March 2004 |
| | | | | EP | 1401037 | A3 | 20 December 2006 |
| | | | | EP | 1401037 | B1 | 10 March 2010 |
| | | | | DE | 60331622 | D1 | 22 April 2010 |
| | | | | US | 7311994 | B2 | 25 December 2007 |
| | | | | KR | 20040025572 | A | 24 March 2004 |
| | | | | KR | 100573358 | B1 | 24 April 2006 |
| WO | 2012120579 | A1 | 13 September 2012 | JP | 2014102877 | A | 05 June 2014 |

Form PCT/ISA/210 (patent family annex) (July 2022)